# FASCICULE DE BREVET EUROPEEN

(11) **EP 2 361 466 B1**
(45) Date de publication et mention de la délivrance du brevet: **09.01.2013**
(21) Numéro de dépôt: 09768154.8
(22) Date de dépôt: 06.11.2009
(51) Int. Cl.: H04L 12/24, H04M 3/22

(54) **PROCÈDE POUR OPTIMISER LA DÉTECTION DE CONTOURNEMENTS D'UN RÉSEAU DE TÉLÉCOMMUNICATIONS**
VERFAHREN ZUR OPTIMIERTEN BYPASSERKENNUNG IN EINEM TELEKOMMUNIKATIONSNETZ
METHOD FOR OPTIMIZING THE DETECTION OF BYPASSING OF A TELECOMMUNICATIONS NETWORK

(30) Priorité: 13.11.2008 FR 0857691
(43) Date de publication de la demande: 31.08.2011
(73) Titulaire: Araxxe, 92200 Neuilly sur Seine (FR)
(72) Inventeur: LESAGE, Xavier, F-92200 Neuilly Sur Seine (FR); SCHOLER, Christophe, F-69100 VILLEURBANNE (FR); BENCHEQROUN, Medhi, F-75006 Paris (FR); ORSINI, Philippe, E-28042 Madrid (ES); EYRAUD, Marion, F-69100 Villeurbanne (FR)
(74) Mandataire: Kingolo, Alain
(86) Numéro de dépôt international: PCT/FR2009/052142
(87) Numéro de publication internationale: WO 2010/055249

(56) Documents cités:
- WO-A1-99/01974
- WO-A2-2008/065157
- FR-A1- 2 908 572

## Description

La présente invention concerne un procédé pour optimiser la détection de contournements d'un réseau de télécommunications. Elle concerne également un système mettant en oeuvre le procédé selon l'invention.
La présente invention se rapporte au domaine des télécommunications et notamment de communications téléphoniques réalisées au travers d'au moins deux réseaux de télécommunications et mettant en jeu des mécanismes d'interconnexion inter opérateurs.

Dans la présente demande, l'expression « passerelle inter opérateur » ou « inter operator gateway » en anglais, désigne un équipement mis en place par un opérateur B pour recevoir les appels à destination des abonnés de l'opérateur B et initiés au sein du réseau d'autres opérateurs. Les autres opérateurs peuvent être des opérateurs domestiques (i.e. établis dans le même pays que l'opérateur B) ou internationaux (i.e. établis dans un autre pays que l'opérateur B). La passerelle inter opérateur possède un ou plusieurs faisceaux d'interconnexion reliant le réseau de l'opérateur B à chacun des autres opérateurs avec lesquels il est interconnecté, généralement appelés opérateurs A dans la terminologie standard de l'interconnexion. Les faisceaux d'interconnexion sont parfois dédiés à différents types de trafic et leurs usages par chaque opérateur A doit respecter les spécifications convenues.
Dans la présente demande, l'expression « abonnement client » désigne une ressource mis à disposition par un opérateur à ses propres clients. Il peut s'agir par exemples d'une carte SIM (Subscriber Identification Module), d'une ligne fixe, d'un numéro ISDN (International Subscriber Data Network) ou d'un numéro de téléphone offrant accès à des services de voix sur IP (Internet Protocol).
Dans la présente demande, l'expression « contournement » ou « Bypass » en anglais, désigne une opération de routage par laquelle une entreprise tierce ou un fraudeur individuel arrive à terminer des appels vers l'opérateur B sans passer par les faisceaux d'interconnexion de la Passerelle Inter Opérateurs normalement dédiés à l'acheminement de ces appels. Le routage est généralement réalisé en détournant un abonnement client de son usage normal et l'utilisant pour terminer un appel sur le réseau de l'opérateur B. Il peut être également réalisé à l'aide de complicités internes au sein des équipes techniques de l'opérateur B.
Dans la présente demande, l'expression « passerelle de contournement » également appelé Boîtier Radio, Gateway, SIM box, SIM Gateway, désigne un équipement utilisé par une entreprise tierce ou un fraudeur pour détourner des abonnements client et réaliser un contournement.
Dans la présente demande, l'expression « route » désigne un couple constitué par un opérateur A et un opérateur B. Une route est, vue de l'opérateur B, un opérateur A. Un opérateur B va vouloir s'assurer que le trafic se terminant sur son réseau en provenance de chaque opérateur A, i.e. de chaque route, est exempt de contournements.
Dans la présente demande, l'expression « phase de détection » désigne dans la présente invention un état de détection de contournement d'une route caractérisant l'intensité de recherche de contournement sur la route par l'invention à un moment donné. Il existe différents types de phases de détection.
Dans la présente demande, l'expression « règle de passage » désigne une règle mathématique prédéterminée permettant de faire passer une route d'une phase de détection à une autre.

Une communication téléphonique entre un appelant et un appelé, que l'un ou l'autre soit mobile ou fixe, met généralement en jeu deux ou plus opérateurs de réseau de télécommunications interconnectés. L'opérateur de l'appelant est appelé opérateur A ; l'opérateur de l'appelé est appelé opérateur B. Malgré les diverses réglementations en jeu dans chaque pays, les tarifications des services d'interconnexion sont généralement élevées en raison de la situation de monopole naturel de chaque opérateur pour la terminaison des appels vers ses propres clients. En raison du caractère élevé de ces tarifs d'interconnexion, les opérateurs doivent, de plus en plus, faire face à des tiers disposant d'une technologie de contournement qui leur permet de réaliser des arbitrages tarifaires entre la méthode normale de terminaison sur un réseau et différentes méthodes de contournement.
Ces contournements concernent des communications d'origine internationale ou domestique se terminant sur un réseau de télécommunications. La méthode normale de terminaison des appels vers un opérateur B consiste à présenter les appels sur les faisceaux dédiés de la passerelle inter opérateurs de l'opérateur B qui réalise la connexion entre le réseau initiant l'appel (i.e. le réseau de l'appelant) et le réseau terminant l'appel (i.e. le réseau de l'appelé). Le coût de terminaison de chaque appel est alors facturé par l'opérateur B à l'opérateur A selon les tarifs d'interconnexion convenus entre eux.
Pour contourner ce fonctionnement normal, des entreprises tierces ou des fraudeurs internes peuvent se procurer des abonnements clients de l'opérateur B qui bénéficient d'un temps de communication illimité ou de conditions tarifaires avantageuses. Ces acteurs peuvent utiliser ensuite ces abonnements clients, par exemple en les installant dans des passerelles de contournement. Ces acteurs sont alors capables d'offrir aux opérateurs A désireux de terminer des appels vers l'opérateur B, un service de terminaison d'appel vers les clients de l'opérateur B à des conditions avantageuses par rapport aux conditions normales d'interconnexion de l'opérateur B, et ce aux dépens de l'opérateur B.

Confrontés à ce problème, les opérateurs de téléphonie ont mis en place des outils permettant de détecter les abonnements clients utilisées pour réaliser ces contournements et terminer des communications téléphoniques sur leur propre réseau à leurs dépens. Il est généralement possible de détecter ces abonnements clients par une analyse des données de trafic relatives à des communications téléphoniques réalisées par leurs clients et de les comparer à des profils types bien définis.
Ces outils d'analyse de trafic présentent plusieurs inconvénients majeurs. Par exemple, ils ne permettent pas à un opérateur de détecter tous les types de contournements et notamment un contournement réalisé grâce à un abonnement téléphonique d'un autre opérateur téléphonique. De plus il est facile pour les acteurs des contournements, dés lors qu'ils connaissent les profils utilisés dans les outils d'analyse de trafic de modifier les profils d'usage des abonnements clients qu'ils utilisent pour échapper à la détection. Enfin les outils d'analyse de trafic fournissent seulement une suspicion de contournement, mais ils ne fournissent pas de preuve opposable à un tiers du contournement réalisé.
La détection de contournements peut également être réalisée en générant des communications téléphoniques de test initiées depuis un nombre important d'opérateurs de télécommunications et en repérant les abonnements clients utilisés pour des éventuels contournements réalisés au cours de ces communications de test. Un tel système est décrit dans la demande de brevet français publiée sous le n° FR2908572 déposée par la demanderesse
Cependant cette deuxième méthode de détection nécessite de générer un nombre important de communications téléphoniques pour détecter les contournements et identifier les différents abonnements clients servant à les réaliser. Or, la génération d'un nombre important de communications téléphoniques nécessite beaucoup de ressources et de temps. Ces communications s'avèrent onéreuses du fait de leur nombre.
Par ailleurs, plus le nombre de communications téléphoniques à générer est important, plus il y a de risque de contre-détection par les acteurs des contournements qui mettent, eu mêmes, en place des outils pour ne pas être détectés et peuvent repérer des volumes anormaux d'appels de test à destination de certains numéros. La génération d'un grand nombre d'appels augmente le risque de contre détection.
Un but de la présente invention est de remédier aux inconvénients précités en proposant un procédé permettant d'optimiser la détection de contournements en minimisant les coûts des communications à générer et en limitant les risques de contre détection par les acteurs des contournements.

L'invention propose d'atteindre les buts précités par un procédé pour optimiser la détection des contournements d'un réseau de télécommunication, en générant une pluralité de communications téléphoniques au départ de différentes routes, ledit procédé étant caractérisé en ce que pour chaque route suspectée de contournement :
- ladite détection est divisée en une pluralité de phases de détection, chacune desdites phases de détection comportant un nombre prédéterminé de communications à générer sur une durée prédéterminée, et
- le passage d'une phase de détection à une autre phase de détection étant réalisé en fonction d'au moins une règle de passage prédéterminée.
Ainsi, le procédé selon l'invention permet de diviser la détection de contournements en plusieurs phases de détection applicables à chacune des routes. Une telle détection permet de traiter chaque route de manière progressive et ainsi d'adapter de manière optimale la détection à chaque route et donc d'optimiser le nombre global de communications à générer. En effet, lorsqu'une première phase ne permet pas de détecter de contournements sur une route on peut supposer qu'il n'y a pas de contournements sur cette route ou que le nombre de contournements est faible et donc que le coût marginal de détection de chaque abonnement client sera élevé, car il faudra générer un nombre important de communications pour détecter chaque nouvel abonnement client. Dans le cas contraire, lorsqu'une première phase permet de détecter un nombre élevé de contournements en comparaison avec le cas précédent, il est opportun de tester intensivement cette route et donc de générer un nombre plus élevé de communications en comparaison avec le cas précédent car les abonnements clients pourront être détectés plus facilement.
Pour chaque route, le passage d'une phase de détection à une autre est géré par au moins une règle de passage pouvant, par exemple, être fondée sur un niveau d'infection calculé pour la route en question.
Le procédé selon l'invention peut avantageusement commencer par une phase de détection, dite phase de découverte, comprenant un nombre de communications faible et réalisées en vue de déterminer si la route comporte des contournements ou non. Ainsi, sur demande d'un opérateur ou d'un utilisateur ou d'un autre système, il est possible de déclencher la phase de découverte de manière à déterminer si la route comporte un contournement, i.e. si la route est infectée ou non. Dans cette phase, le nombre de communications téléphoniques à générer est relativement faible, par exemple de 10 communications téléphoniques par jour.
Le procédé selon l'invention peut en outre comprendre, une phase de détection, dite phase de détection active, réalisant rapidement un très grand nombre de communications en vue de l'identification d'un nombre maximum d'abonnements clients utilisés par cette route pour les contournements du dit réseau de télécommunication. Le passage à ladite phase de détection active est réalisé lorsqu'au moins un contournement est détecté lors d'une autre phase de détection. Lorsqu'une partie importante des abonnements clients utilisés par cette route a été détectée, la détection peut alors basculer vers une autre phase de détection, par exemple une phase dite « phase de déconnexion ».
Avantageusement, le procédé selon l'invention peut comprendre une phase de détection, dite phase de déconnexion, réalisée par exemple après une phase de détection, ladite phase de déconnexion correspondant à une phase où l'opérateur B réalise les opérations manuelles ou automatiques de déconnexion des abonnements clients détectés par la procédé selon l'invention.
Selon une version avantageuse, le procédé selon l'invention peut en outre comprendre une phase de détection, dite phase de protection, réalisant un nombre très faible de communications, par exemple une dizaine par mois. Cette phase de protection peut être réalisée en vue de surveiller qu'aucun nouveau contournement n'a été mis en place sur la route, le passage à ladite phase de protection étant réalisée lorsqu'aucun contournement n'est détecté au bout d'un certain temps d'activité d'une autre phase de détection. La phase de protection permet de réaliser une surveillance de la route pour, d'une part prouver que la route n'est pas infectée et, d'autre part détecter un éventuel contournement le plus rapidement possible. Une telle détection pouvant, par exemple, être suivi très rapidement d'une phase de détection active. Ainsi, l'éventuelle infection sur la route peut être combattue très rapidement. Une telle phase de protection permet une grande réactivité et diminue les pertes des opérateurs téléphoniques dues aux contournements.

Le procédé selon l'invention peut en outre comprendre une phase de détection, dite phase de vérification, réalisant un grand nombre de communications. La phase de vérification peut être réalisée en vue de prouver qu'aucun contournement n'existe sur une route, le passage à ladite phase de vérification étant réalisé sur demande. Cette phase permet d'obtenir une certitude, par exemple selon des lois de la probabilité, de l'absence totale de contournements.
Le procédé selon l'invention comprend en outre une phase de détection dite phase de veille, ne comprenant aucune communication réalisée, le passage à ladite phase de veille étant réalisé sur demande. Lorsque qu'une route ne comporte pas de contournement, par exemple après une phase de protection, alors une telle phase de veille peut être appliquée pour diminuer encore plus le nombre de communications générées pour la détection de contournements.

Le procédé selon l'invention peut comprendre une détermination du taux d'infection et/ou du taux de complétude de détection en fonction d'estimateurs statistiques fondés sur l'analyse des communications déjà réalisées par l'invention. L'avantage d'utiliser de tels estimateurs, fondées sur des règles mathématiques, est d'optimiser le nombre de communications à générer pour détecter un maximum d'abonnements clients utilisés dans des contournements.
Les règles de passage d'une phase de détection à une autre peuvent être basées sur un taux d'infection. En effet le procédé selon l'invention peut en outre comprendre une détermination d'un taux d'infection d'une route en fonction d'un nombre de communications réalisés, et d'un nombre de contournement détectés lors des communications de tests déjà réalisées. Plus particulièrement, ce taux d'infection peut être déterminé comme étant le quotient du nombre de contournements réalisés sur une route par le nombre de communications générées sur cette route.
Les règles de passage d'une phase de détection à une autre peuvent en outre être basées sur un taux de complétude de détection. Le taux de complétude de détection peut par exemple correspondre au quotient du nombre total d'abonnements clients déjà détectés sur une route par le nombre total d'abonnement clients utilisés sur cette route. En effet, le procédé selon l'invention peut en outre comprendre une détermination d'un nombre total d'abonnements clients utilisés pour les contournements sur une route donnée, en fonction d'un nombre de communications réalisées et d'un nombre d'abonnements clients déjà détectés lors desdites communications et d'une règle statistique. Plus particulièrement, ce nombre d'abonnements clients peut être estimé par une règle mathématique permettant de relier ce nombre aux deux éléments suivants:
- nombre de communications téléphoniques de test réalisées sur cette route,
- nombre d'abonnements clients différents détectés dans ces contournements.
Cette formule peut être utilisée lors de la phase de détection active d'une route. Par exemple, il est possible d'estimer le nombre total d'abonnements clients utilisés par une route pour laquelle 90 communications générées ont permis de détecter 35 cartes SIM différentes.
Le procédé selon l'invention peut comprendre une détermination d'un nombre de communications à réaliser pour détecter, avec une probabilité donnée, s'il existe ou non un contournement sur une route donnée en fonction d'un taux d'infection maximum de ladite route et d'une règle statistique reliant ledit taux d'infection et ledit nombre de communications à réaliser.
De telles règles statistiques sont déterminées en fonction de données relatives à des communications ou détections passées et une étude expérimentale et une simulation basée sur des modèles statistiques et mathématiques.

Avantageusement, le procédé selon l'invention peut en outre comprendre un brouillage des communications générées, ledit brouillage comportant une génération en cascade des communications téléphoniques réalisées vers au moins deux niveaux d'abonnements clients reliés entre eux par des mécanismes de redirection d'appels.En effet, pour diminuer les risques de contre-détection par les acteurs réalisant les contournements, le procédé peut avantageusement comprendre un brouillage des communications générées. Pour cela, les communications téléphoniques sont générées au travers d'une cascade d'abonnements clients composée d'au moins deux couches d'abonnements clients reliées entre elles par des mécanismes de dérivation d'appels. Ces cascades d'abonnements clients permettent une plus grande furtivité des appels de tests en multipliant les destinations appelées.

Selon une version avantageuse le procédé selon l'invention peut comprendre une documentation de la détection d'un contournement dans un rapport de preuve réconciliant sur un même document la partie initiale de la communication de test, la partie terminale de la communication de test et le numéro utilisé par l'abonnement client ayant réalisé le contournement. En effet, grâce au procédé selon l'invention il est possible de produire des rapports de preuves opposables à des tiers prouvant la matérialité du contournement en réconciliant une par une les deux parties de la communication de test tracée pour la première par le robot initiant la communication et pour la seconde par le robot terminant la communication. Cette réconciliation peut être complétée en réconciliant également l'information avec l'information de signalisation mesurée par une sonde installée dans le réseau de l'opérateur B.

Selon un autre aspect de l'invention, il est proposé un système comprenant les moyens, électroniques ou informatiques mettant en oeuvre le procédé selon l'invention. Le procédé peut être implémenté au moyen d'un réseau international d'automates d'appels, situés dans des sites pouvant être des sites distants, capables de générer un grand nombre de communications initiées au départ d'une pluralité d'opérateurs A (i.e. de routes) et se terminant sur le réseau de l'opérateur B et sur celui de ses concurrents domestiques. L'existence d'un contournement peut être détecté par l'analyse de l'identifiant de l'appelant tel que transmis par la signalisation du réseau ou par le traçage du faisceau d'interconnexion sur lequel l'appel a été reçu par l'opérateur B.

D'autres avantages et caractéristiques apparaîtront à l'examen de la description détaillée d'un mode de réalisation nullement limitatif, et des dessins annexés sur lesquels :
- la figure 1 est une représentation schématique d'une situation de contournement ;
- la figure 2 est une représentation schématique d'une modélisation d'une route infectée par des contournements ;
- la figure 3 est un exemple de règle statistique présentée sous la forme d'un tableau et permettant une détermination d'un nombre de communications à réaliser pour vérifier, avec une probabilité donnée, s'il existe ou non un contournement sur une route en fonction d'un taux d'infection recherché;
- la figure 4 est un exemple d'une règle statistique présentée sous la forme d'un abaque et permettant de déterminer le nombre total d'abonnements clients utilisées sur une route pour réaliser des contournements ;
- la figure 5 est une représentation schématique sous forme séquentielle d'un procédé de détection selon l'invention composé de plusieurs phases de détection et de règles de passage entre ces différentes phases de détection pour chaque route;
- la figure 6 est une représentation schématique d'une architecture de cartes SIM utilisée selon l'invention pour limiter les risques de contre-détection.

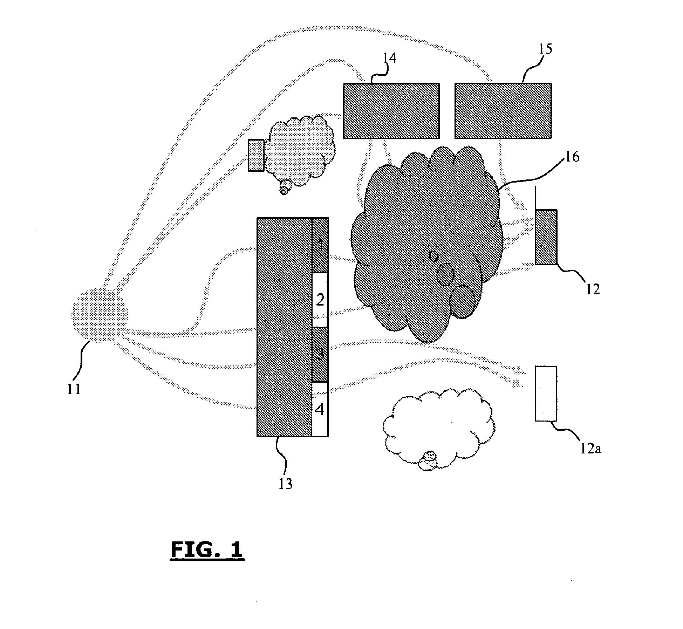

La figure 1 est une représentation schématique de plusieurs types de contournements d'un réseau de télécommunications mobiles lors de communications téléphoniques entre un appelant 11 et un ou plusieurs destinataires 12 et 12a. Une passerelle de contournement 13 comprenant une ou plusieurs cartes SIM, est installée sur l'itinéraire de télécommunications entre l'appelant 11 et les destinataires 12 et 12a. Dans le présent exemple la passerelle de contournement comprend quatre cartes SIM. Ce boitier 13 de cartes SIM agit comme une passerelle inter opérateurs. Les communications téléphoniques émanant de l'appelant 11 doivent normalement passer par la passerelle inter opérateurs 14 destinée au trafic d'origine locale ou à la passerelle inter opérateurs 15 destinée au trafic d'origine internationale. Dans ces deux cas, la communication est alors acheminée normalement par le réseau 16 de l'opérateur de téléphonie. Ce dernier facture une prestation de service d'interconnexion réalisée par la passerelle inter opérateurs 14 ou 15. Or, lorsqu'il y a des contournements sur une route, les communications téléphoniques initiées par l'appelant 11 vers le destinataire 12 ou 12a sont déviées et ne passent pas par les passerelles inter opérateurs. Dans ce cas, c'est le passerelle de contournement 13 qui remplace la passerelle inter opérateurs, réalise le suivi de la communication téléphonique et facture la prestation qui aurait dû être réalisée par la passerelle inter opérateurs locale 14 ou internationale 15.

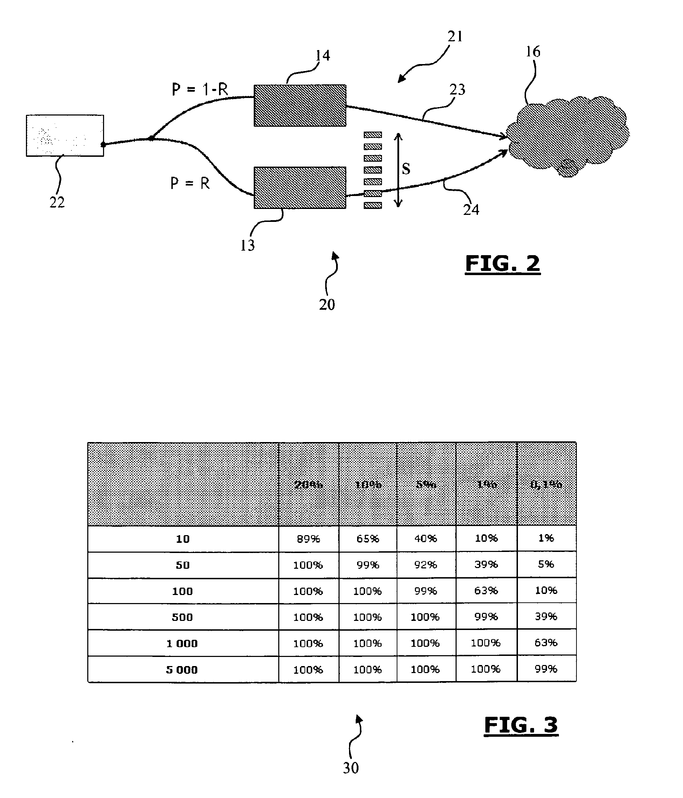

La figure 2 est un exemple de modélisation d'une route utilisée dans le procédé selon l'invention. Le modèle 20 représenté en figure 2, permet de modéliser mathématiquement une route 21 entre un point d'entrée 22 qui peut être un appelant ou un réseau international ou tout autre réseau, par exemple Internet, et le réseau 16 de l'opérateur de téléphonie. Selon le modèle 20, la route 21 est composée d'une première branche 23 comportant une passerelle inter opérateurs 14 et une deuxième branche 24 comportant une passerelle de contournement 13 comportant un nombre S d'abonnements téléphoniques. A chaque branche est associé un poids P calculé en fonction de la probabilité que la route 21 comporte un contournement. Dans l'exemple présent cette probabilité est de R. Donc la branche 24 comportant la passerelle de contournement 13 a un poids P qui est égal à la probabilité R et la branche 23 comportant le passerelle inter opérateurs 14 a un poids P=1-R. De cette manière, chaque itinéraire est représenté mathématiquement et des règles statistiques peuvent être utilisées pour déterminer l'état de chaque route et mettre en place une détection selon l'invention comportant plusieurs phases de détection et des règles de passage entre les phases de détection.

Pour ce faire, la présente invention utilise trois règles statistiques illustrées successivement dans les figures 2,3 et 4.

La première règle, illustré par la figure 2, est la suivante : étant donné un itinéraire de télécommunication, lorsque Y contournements sont détectés pour X communications téléphoniques générées sur cet itinéraire, la probabilité que des contournements soient présents sur cet itinéraire est estimée au quotient de Y par X. Lorsque Y = 27 pour X=100 alors la probabilité de trouver un contournement sur cet itinéraire est de 27%. Ainsi il est possible de calculer le poids P de chacune des branches 23 et 24 tel que représentées sur la figure 2.

La deuxième règle utilisée est une règle statistique déterminée en fonction de données récoltées, de simulations et d'expérimentations réalisée et qui permet de déterminer un nombre de communications à réaliser pour détecter, avec une probabilité donnée, s'il existe ou non un contournement sur un itinéraire en fonction d'un taux d'infection dudit itinéraire, de ladite probabilité. Un exemple d'une telle règle est données en figure 3 sous la forme d'un tableau 30. La colonne de gauche donne le nombre de communications à générer et la ligne du haut donne la probabilité d'infection d'une route, i.e. la probabilité qu'il existe un contournement sur cet itinéraire. Les différentes cases donnent la probabilité de détection d'un contournement en fonction du nombre d'appels à générer et de la probabilité d'infection d'un itinéraire. Ainsi, par exemple, en générant 100 communications téléphoniques sur un itinéraire téléphoniques infecté à 1%, on aura 63% de chance de détecter un contournement. Par ailleurs, en générant 500 communications téléphoniques sur un itinéraire téléphonique infecté à 1%, on aura 99% de chance de détecter un contournement. Cette chance est de 39% lorsque l'itinéraire est infecté à 0.1%, etc... Cette deuxième règle statistique permet de déterminer le nombre de communications à réaliser pour détecter avec une probabilité donnée s'il existe un contournement sur un itinéraire ou non. Ainsi, le nombre de communications à générer en vue de la détection de contournement peut être adapté à l'état de chaque itinéraire de télécommunication et surtout au niveau d'infection préalablement déterminé de chaque itinéraire.

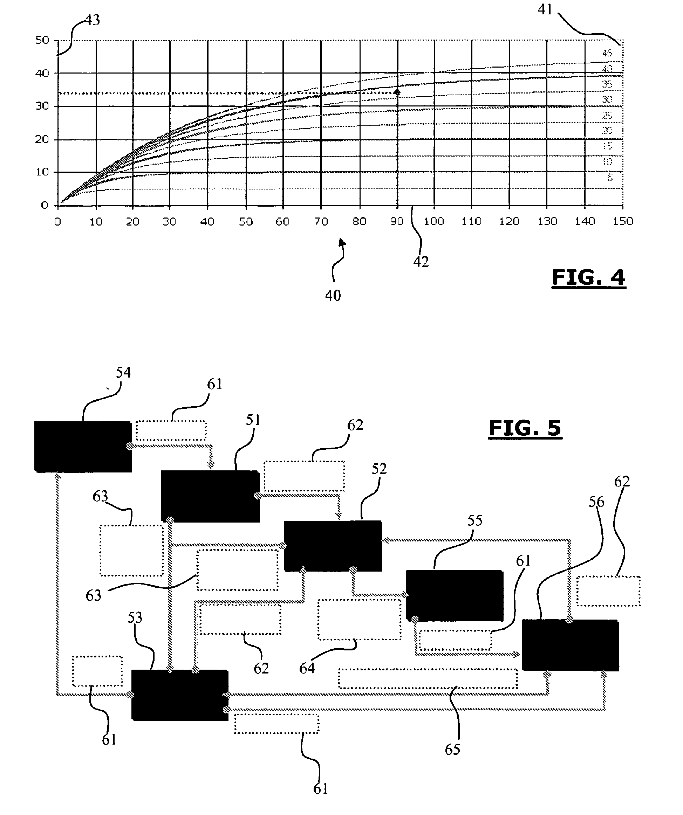

Enfin, la troisième règle utilisée est une règle statistique présentée sous la forme d'un abaque 40 en figure 4. Cette règle permet de déterminer le nombre total d'abonnements clients présents dans la passerelle de contournement en fonction d'un nombre de communications générées et d'un nombre d'abonnements clients différents détectés lors des précédentes communications générées pour détecter les contournements. Les nombres dans la zone 41 représentent le nombre total d'abonnements clients utilisées dans la passerelle de contournement, l'axe 42 le nombre de communications téléphoniques réalisées et l'axe 43 le nombre d'abonnements clients effectivement détectés lors des communications téléphoniques. Par exemple, 90 communications téléphoniques générées ont permis de détecter 35 abonnements clients différents. En rapportant ces deux valeurs sur l'abaque, il est possible de déterminer que le nombre total d'abonnements téléphonique est compris entre la ligne correspondant à 35 abonnements clients et la ligne correspondant à 40 abonnements clients. Donc, il est possible d'affirmer que la passerelle de contournement comprend environ 40 abonnements clients. Il est utile de constater que cette règle mathématique est indépendante du taux d'infection de la route qui n'est pas nécessairement connu.

La figure 5 décrit un exemple de détection de contournements selon l'invention avec un enchaînement de phases de détection et de règles de passage.
La détection de contournements débute par une phase 51 de découverte réalisée à la demande pour un ensemble de par exemple 400 routes. Au delà de cet état initial chaque route va basculer selon les phases de détection et les règles de passages suivantes.
Dans la phase de découverte 51, un nombre faible, par exemple 100 par mois, de communications téléphoniques sont générées.
Dans la phase de détection active 52, un nombre maximal de communications sont générées en vue de détecter les contournements, et d'identifier les abonnements clients utilisées pour réaliser ces contournement.

Dans la phase de protection 53 un nombre très faible de communication sont générées, par exemple 10 mois par mois.
Dans la phase de veille 54, aucune communication de test n'est générée.
Dans la phase de déconnexion 55, aucune communication de test n'est générée.
Dans la phase de vérification 56, un nombre prédéterminé de communications est généré, le dit nombre de communications dépendant du taux d'infection maximum recherché selon la figure 3.
La règle de passage initiale vers la phase de découverte 51 est la règle 61 « Sur demande ».
La règle de passage de la phase de découverte 51 vers la phase de détection active 52 est la règle 62 « Au moins un contournement détecté ».
La règle de passage de la phase de découverte 51 vers la phase de protection 53 est la règle 63 « Aucun contournement détecté au bout d'un nombre important de communications, par exemple 1000 ».
La règle de passage de la phase de détection active 52 vers la phase de déconnexion 55 est la règle 64 « Au moins 90% des abonnements clients utilisés sur la route ont été détectées ». Ce pourcentage étant calculé à l'aide de la troisième règle statistique décrite plus haut.
La règle de passage de la phase de déconnexion 55 vers la phase de détection active 52 est la règle 61, « Sur demande ».
La règle de passage depuis la phase de détection active 52 vers la phase de protection 53 est la règle 63 « Aucun contournement détecté au bout d'un nombre important de communications, par exemple 1000».
La règle de passage de la phase de protection 53 vers la phase de vérification 56 est la règle 61 « Sur demande ».
La règle de passage de la phase de protection 53 vers la phase de détection active 52 est la règle 62 « Au moins un contournement détecté ».
La règle de passage de la phase de protection 53 à la phase de veille 54 est la règle 61 « Sur demande ».
La règle de passage d'une phase quelconque vers la phase de vérification 51 est la règle 61, « Sur demande ».

La règle de passage de la phase de vérification 56 à la phase de détection active 52 est la règle 62 « Au moins un contournement détecté ».
La règle de passage de la phase de vérification 56 à la phase de protection 53 est la règle 65 « Aucun contournement détecté au bout du nombre prédéterminé de communications ».
Les règles de passage d'une phase de détection à une autre peuvent être différentes de celles utilisées dans le présent exemple.

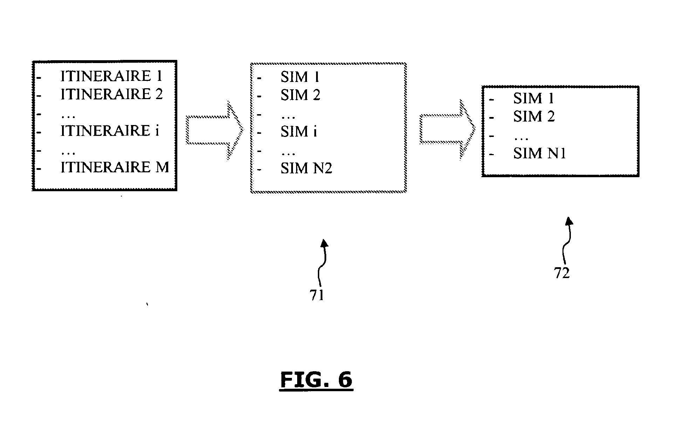

La figure 6 illustre un brouillage des communications réalisées en vue d'éviter une contre détection par les acteurs réalisant les contournements. Pour cela, les communications sont générées en direction d'une cascade de cartes SIM ayant des redirections d'appels entre elles, telles que représentées dans la figure 6. Une telle cascade de cartes SIM selon l'invention comprend au moins deux niveaux de cartes SIM. Pour améliorer le brouillage un troisième niveau de cartes SIM peut être ajouté. Ces communications sont ensuite déviées par la première couche 71 de cartes SIM puis terminés par la deuxième couche 72 de cartes SIM. Pour une telle génération de communications téléphoniques, le nombre N1 de cartes de SIM dans par la deuxième couche 72 est très inférieur au nombre N2 de cartes SIM dans la première couche (N1<<N2). Par ailleurs, pour réaliser une telle génération de communications brouillées, il est suffisant d'utiliser un nombre N1 de cartes SIM inférieur au nombre N de cartes SIM qui seraient utilisées lors d'une génération brouillée de communications téléphoniques mettant en oeuvre une seule couche ou niveau de cartes SIM (N1<N).

Bien entendu l'invention n'est pas limitée aux exemples qui viennent d'être décrits. Des modifications peuvent être apportées à l'invention telle que décrit ci-dessus, sans que cela sorte du champ de l'invention.

## Revendications

1. Procédé pour réaliser la détection de contournements d'un réseau de télécommunication, lesdits contournements étant réalisés avec au moins une passerelle de contournement (13), ladite détection étant réalisée en :
■ générant une pluralité de communications téléphoniques de test au départ d'une pluralité d'opérateurs et à destination d'un opérateur et de ses concurrents directs, et
■ analysant l'identifiant de l'appelant tel que transmis par la signalisation du réseau ou par le traçage du faisceau d'interconnexion sur lequel l'appel à été reçu lors desdites communications téléphoniques de test ;
ledit procédé étant **caractérisé en ce que** :
- ladite détection est divisée en une pluralité de phases (51-56) de détection, chacune desdites phases (51-56) de détection comportant un nombre prédéterminé de communications à générer sur une durée prédéterminée pour une route donnée, et
- le passage d'une phase de détection (51-56) à une autre phase de détection (51-56) est réalisé en fonction d'au moins une règle (61-64) prédéterminée en fonction d'un nombre de contournements détectés lors de ladite phase ;
ladite pluralité de phases de détection comprenant :
- une phase, dite de découverte, réalisant un nombre de communications faible déterminé en fonction d'une probabilité donnée, d'un taux d'infection et d'une règle statistique reliant ladite probabilité audit taux d'infection, ladite phase de découverte étant réalisée en vue de déterminer si une route comporte un contournement ou non, et
- une phase, dite de découverte active, réalisant un nombre maximal de communications en vue de l'identification d'abonnements utilisés pour le contournement.

2. Procédé selon la revendication 1, **caractérisé en ce qu'**il comprend en outre une détermination d'un taux d'infection d'une route en fonction d'un nombre de communications réalisées, et d'un nombre de contournements détectés lors des communications de tests déjà réalisées.

3. Procédé selon l'une quelconque des revendications 1 ou 2, **caractérisé en ce qu'**il comprend en outre une détermination d'un nombre total (41) d'abonnements clients utilisés pour les contournements sur une route donnée, en fonction d'un nombre de communications réalisées (42) et d'un nombre d'abonnements clients déjà détectés (43) lors desdites communications et d'une règle statistique (40).

4. Procédé selon l'une quelconque des revendications 2 ou 3, **caractérisé en ce qu'**il comprend en outre une détermination d'un nombre de communications à réaliser pour détecter, avec une probabilité donnée, s'il existe ou non un contournement sur un itinéraire en fonction d'un taux d'infection dudit itinéraire, de ladite probabilité et d'une règle statistique (30) reliant ledit taux d'infection, ladite probabilité et ledit nombre de communications à réaliser.

5. Procédé selon l'une quelconque des revendications précédentes, **caractérisé en ce qu'**il comprend en outre un brouillage des communications générées, ledit brouillage comportant une génération en cascade des communications téléphoniques réalisées vers au moins deux niveaux d'abonnements clients reliés entre eux par des mécanismes de redirection d'appels.

6. Procédé selon l'une quelconque des revendications précédentes, **caractérisé en ce qu'**il comprend en outre une documentation de la détection d'un contournement dans un rapport de preuve réconciliant sur un même document la partie initiale de la communication de test, la partie terminale de la communication de test et le numéro utilisé par l'abonnement client ayant réalisé le contournement.

7. Procédé selon l'une quelconque des revendications précédentes, **caractérisé en ce que** la détection peut comprendre au moins une des phases suivantes :
- une phase (51), dite phase de découverte, comprenant un nombre de communications faible déterminé en fonction d'une probabilité donnée, d'un taux d'infection et d'une règle statistique reliant ladite probabilité audit taux d'infection, ladite phase de découverte étant réalisée en vue déterminer si une route comporte un contournement ou non, le passage à ladite phase de détection étant réalisé sur demande,
- une phase (52), dite phase de détection active, réalisant un nombre maximum de communications en vue de l'identification d'un pourcentage prédéterminé d'abonnements client utilisés pour le contournement du réseau de télécommunication, le passage à ladite phase de détection active (52) étant réalisé lorsqu'au moins un contournement est détecté lors d'une autre phase de détection,
- une phase (53), dite phase de protection, réalisant un nombre de communications très faible, déterminé en fonction d'une probabilité donnée, d'un taux d'infection et d'une règle statistique reliant ladite probabilité audit taux d'infection, ladite phase de protection (53) étant réalisée en vue de surveiller qu'aucun nouveau contournement n'est mis en place sur une route, le passage à ladite phase de protection (53) étant réalisé lorsqu'aucun contournement n'est détecté lors d'une autre phase de détection,
- une phase (54), dite phase de veille, ne comprenant aucune communication, le passage à ladite phase de veille (54) étant réalisé sur demande,
- une phase (55), dite phase de déconnexion, réalisant la déconnexion d'au moins un abonnement client utilisé pour un contournement, et
- une phase (56), dite phase de vérification, réalisant un grand nombre de communications déterminé en fonction d'un taux d'infection maximum prédéterminée, ladite phase de vérification (56) étant réalisée en vue de vérifier qu'aucun contournement n'existe sur une route.

8. Système comprenant les moyens mettant en oeuvre toutes les étapes du procédé selon l'une quelconque des revendications précédentes.

## Claims

1. Method for carrying out the detection of bypasses of a telecommunication network, said bypasses realized with at least one bypass gateway (13), said detection being carried out by:
■ generating a plurality of test telephone calls from a plurality of operators to one operator and its direct competitors, and
■ analyzing the caller identifier as transmitted by the network signalling or by tracing the trunk group on which the call was received during said test telephone calls;
said method being **characterized in that**:
- said detection is divided into a plurality of detection phases (51-56), each of said detection phases (51-56) comprising a predetermined number of calls to be generated over a predetermined duration for a given route, and
- the transition from one detection phase (51-56) to another detection phase (51-56) takes place as a function of at least one rule (61-64) predetermined as a function of a number of bypasses detected during said phase;
said plurality of detection phases comprising:
- a so-called discovery phase, carrying out a small number of calls determined as a function of a given probability, an infection rate and a statistical rule linking said probability to said infection rate, said discovery phase being carried out in order to determine if a route comprises a bypass or not, and
- a so-called active discovery phase, carrying out a maximum number of calls in order to identify subscriptions used for the bypass.

2. Method according to claim 1, **characterized in that** it comprises moreover determining an infection rate of a route as a function of a number of calls carried out, and a number of bypasses detected during the test calls already carried out.

3. Method according to any one of claims 1 or 2, **characterized in that** it comprises moreover determining a total number (41) of client subscriptions used for the bypasses on a given route, as a function of a number of calls carried out (42) and a number of client subscriptions already detected (43) during said calls and a statistical rule (40).

4. Method according to any one of claims 2 or 3, **characterized in that** it comprises moreover determining a number of calls to be carried out in order to detect, with a given probability, whether or not there is a bypass on a path as a function of an infection rate of said path, said probability and a statistical rule (30) linking said infection rate, said probability and said number of calls to be carried out.

5. Method according to any one of the previous claims, **characterized in that** it comprises moreover scrambling the generated calls, said scrambling comprising cascade generation of telephone calls made to at least two client subscription levels linked together by call redirection mechanisms.

6. Method according to any one of the previous claims, **characterized in that** it comprises moreover documenting the detection of a bypass in an evidence report that reconciles in a single document the initiating part of the test call, the terminating part of the test call and the number used by the client subscription having carried out the bypass.

7. Method according to any one of the previous claims, **characterized in that** the detection can comprise at least one of the following phases:
- a so-called discovery phase (51), comprising a small number of calls determined as a function of a given probability, an infection rate and a statistical rule linking said probability to said infection rate, said discovery phase being carried out in order to determine if a route comprises a bypass or not, the transition to said detection phase being carried out on demand,
- a so-called active detection phase (52), carrying out a maximum number of calls in order to identify a predetermined percentage of client subscriptions used for bypassing the telecommunication network, the transition to said active detection phase (52) being carried out when at least one bypass is detected during another detection phase,
- a so-called protection phase (53), carrying out a very small number of calls, determined as a function of a given probability, an infection rate and a statistical rule linking said probability to said infection rate, said protection phase (53) being carried out in order to monitor that no new bypass has been installed on a route, the transition to said protection phase (53) taking place when no bypass is detected during another detection phase,
- a so-called surveillance phase (54), not comprising any call, the transition to said surveillance phase (54) taking place on demand,
- a so-called disconnection phase (55), carrying out the disconnection of at least one client subscription used for a bypass, and
- a so-called verification phase (56), carrying out a large number of calls determined as a function of a predetermined maximum infection rate, said verification phase (56) being realized in order to verify that no bypass exists on a route.

8. System comprising the means implementing all of the steps of the method according to any one of the previous claims.

## Patentansprüche

1. Verfahren zum Durchführen der Erfassung von Umgehungen eines Telekommunikationsnetzes, wobei die Umgehungen mit wenigstens einem Umgehungs-Gateway (13) realisiert sind, wobei die Erfassung vollzogen wird durch:
- Generieren einer Vielzahl von Testtelefonanrufen abgehend von einer Vielzahl von Betreibern zu einem Betreiber und seinen direkten Konkurrenten und durch
- Analysieren der Kennung des Anrufers wie sie durch die Signalisierung des Netzes übermittelt wird oder durch das Verfolgen des Verbindungsstranges, auf dem der Anruf bei den Testtelefonanrufen empfangen wurde,
wobei das Verfahren **dadurch gekennzeichnet ist, dass**:
- die Erfassung in eine Vielzahl von Erfassungsphasen (51-56) unterteilt ist, wobei eine jede der Erfassungsphasen (51-56) eine vorbestimmte Anzahl von Anrufen, die über eine vorbestimmte Dauer für eine gegebene Strecke zu generieren sind, umfasst, und
- der Übergang von einer Erfassungsphase (51-56) zu einer anderen Erfassungsphase (51-56) in Abhängigkeit wenigstens einer Regel (61-64) erfolgt, die in Abhängigkeit einer Anzahl von während der Phase erfassten Umgehungen vorbestimmt wird,
wobei die Vielzahl von Erfassungsphasen umfasst:
- eine sogenannte Aufdeckungsphase, die eine geringe Anzahl von Anrufen durchführt, welche in Abhängigkeit einer gegebenen Wahrscheinlichkeit, einem Infektionsgrad und einer die Wahrscheinlichkeit mit dem Infektionsgrad verbindenden statistischen Regel bestimmt wird, wobei die Aufdeckungsphase durchgeführt wird, um zu ermitteln, ob eine Strecke eine Umgehung aufweist oder nicht, und
- eine sogenannte aktive Aufdeckungsphase, die eine maximale Anzahl von Anrufen im Hinblick auf die Identifikation von für die Umgehung verwendeten Abonnements durchführt.

2. Verfahren nach Anspruch 1, **dadurch gekennzeichnet, dass** es ferner eine Ermittlung eines Infektionsgrades einer Strecke in Abhängigkeit einer Anzahl von durchgeführten Anrufen, sowie einer Anzahl von während der bereits durchgeführten Testanrufe erfassten Umgehungen umfasst.

3. Verfahren nach einem der Ansprüche 1 oder 2, **dadurch gekennzeichnet, dass** es ferner eine Ermittlung einer Gesamtzahl (41) von für die Umgehungen auf einer gegebenen Strecke verwendeten Clientabonnements in Abhängigkeit einer Anzahl von durchgeführten Anrufen (42) und einer Anzahl von bei den Anrufen bereits erfassten Clientabonnements (43) sowie einer statistischen Regel (40) umfasst.

4. Verfahren nach einem der Ansprüche 2 oder 3, **dadurch gekennzeichnet, dass** es ferner eine Ermittlung einer Anzahl von Anrufen umfasst, die durchzuführen sind, um mit einer gegebenen Wahrscheinlichkeit, in Abhängigkeit eines Infektionsgrades der Strecke, der Wahrscheinlichkeit und einer statistischen Regel (30), welche den Infektionsgrad, die Wahrscheinlichkeit und die Anzahl an durchzuführenden Anrufen verbindet, zu erfassen, ob auf einer Strecke eine Umgehung vorhanden ist oder nicht.

5. Verfahren nach einem der vorhergehenden Ansprüche, **dadurch gekennzeichnet, dass** es ferner ein Stören der generierten Anrufe umfasst, wobei das Stören ein kaskadenförmiges Generieren der durchgeführten Telefonanrufe zu wenigstens zwei durch Rufumleitungsmechanismen untereinander verbundenen Clientabonnement-Ebenen umfasst.

6. Verfahren nach einem der vorhergehenden Ansprüche, **dadurch gekennzeichnet, dass** es ferner eine Dokumentation der Erfassung einer Umgehung in einem Beweisbericht umfasst, der in einem gleichen Dokument den Anfangsteil des Testanrufs, den Endteil des Testanrufs sowie die Nummer, die durch das Clientabonnement, das die Umgehung durchgeführt hat, verwendet wird, in Einklang bringt.

7. Verfahren nach einem der vorhergehenden Ansprüche, **dadurch gekennzeichnet, dass** die Erfassung wenigstens eine der folgenden Phasen umfassen kann:
- eine sogenannte Aufdeckungsphase (51), die eine geringe Anzahl von Anrufen umfasst, welche in Abhängigkeit einer gegebenen Wahrscheinlichkeit, einem Infektionsgrad und einer die Wahrscheinlichkeit mit dem Infektionsgrad verbindenden statistischen Regel bestimmt wird, wobei die Aufdeckungsphase durchgeführt wird, um zu ermitteln, ob eine Strecke eine Umgehung aufweist oder nicht, wobei der Übergang zu der genannten Erfassungsphase auf Anfrage vollzogen wird,
- eine sogenannte aktive Erfassungsphase (52), die eine maximale Anzahl von Anrufen im Hinblick auf die Identifikation eines vorbestimmten Prozentsatzes von für die Umgehung des Telekommunikationsnetzes verwendeten Clientabonnements durchführt, wobei der Übergang zu der aktiven Erfassungsphase (52) dann vollzogen wird, wenn wenigstens eine Umgehung bei einer anderen Erfassungsphase erfasst wird,
- eine sogenannte Schutzphase (53), die eine sehr geringe Anzahl von Anrufen durchführt, die in Abhängigkeit einer gegebenen Wahrscheinlichkeit, eines Infektionsgrades und einer die Wahrscheinlichkeit mit dem Infektionsgrad verbindenden statistischen Regel bestimmt wird, wobei die Schutzphase (53) durchgeführt wird, um zu überwachen, dass keine neue Umgehung auf einer Strecke eingerichtet wird, wobei der Übergang zu der Schutzphase (53) dann vollzogen wird, wenn keine Umgehung bei einer anderen Erfassungsphase erfasst wird,
- eine sogenannte Standby-Phase (54), die keinen Anruf umfasst, wobei der Übergang zu der Standby-Phase (54) auf Anfrage vollzogen wird,
- eine sogenannte Abschaltphase (55), die die Abschaltung wenigstens eines für eine Umgehung verwendeten Clientabonnements vollzieht, und
- eine sogenannte Überprüfungsphase (56), die eine große Anzahl von Anrufen durchführt, welche in Abhängigkeit eines vorbestimmten maximalen Infektionsgrades bestimmt wird, wobei die Überprüfungsphase (56) durchgeführt wird, um festzustellen, dass keine Umgehung auf einer Strecke vorhanden ist.

8. System, das die Mittel umfasst, die alle Schritte des Verfahrens nach einem der vorhergehenden Ansprüche durchführen.
